# EUROPEAN PATENT APPLICATION

(11) **EP 2 116 765 A2**
(43) Date of publication of application: **11.11.2009**
(21) Application number: 09158782.4
(22) Date of filing: 24.04.2009
(51) Int. Cl.: F23C 9/00, F23J 15/00, F23J 15/02, F23L 7/00

(54) **Oxyfuel boiler system and method of retrofit of air fired boiler to oxyfuel boiler**

(30) Priority: 07.05.2008 JP 2008120865
(71) Applicant: Hitachi, Ltd., Tokyo 100-8280 (JP)
(72) Inventor: Shibata, Tsuyoshi, Tokyo 100-8220 (JP); Taniguchi, Masayuki, Tokyo 100-8220 (JP); Orita, Hisayuki, Tokyo 100-8220 (JP); Ito, Osamu, Tokyo 100-8220 (JP)
(74) Representative: Erny, Tobias

(57) **Abstract**

An oxyfuel boiler system, comprising: an oxygen generator to separate oxygen from air; a coal supply unit to dry and pulverize coal; a burner having a fuel feed path for feeding pulverized coal supplied from the coal supply unit and an oxidizer feed path for feeding oxidizer; a boiler provided with the burner; an exhaust gas discharge line to discharge exhaust gas generated in the boiler into environment; an exhaust gas treatment apparatus provided in the exhaust gas discharge line, a CO₂ separator provided downstream of the exhaust gas treatment apparatus in the exhaust gas discharge line to separate CO₂ from the exhaust gas; an exhaust gas recirculation line including an exhaust gas tapping port provided in the exhaust gas discharge line to extract a part of the exhaust gas; and
an oxygen supply line to supply the oxygen generated at the oxygen generator to the exhaust gas flowing through the exhaust gas recirculation line,
wherein the exhaust gas treatment apparatus is provided with at least an SO₃ removing unit and a moisture removing unit; and the exhaust gas tapping port of the exhaust gas recirculation line is disposed downstream of the exhaust gas treatment apparatus and upstream of the CO₂ separator for recirculating a part of the gas extracted from the port to the coal supply unit and/or the boiler.

## Description

### BACKGROUND OF THE INVENTION

### [Field of the Invention]

The present invention relates to an oxyfuel boiler system, a method for retrofitting a pulverized coal firing boiler, a control apparatus of an oxyfuel boiler system and a method for controlling an oxyfuel boiler system.

### [Description of Related Art]

Coal firing power generation system configured with a pulverized coal firing boiler and a steam turbine electric generator is considered to play a significant role in future energy supply, given the recent years' energy price increases resulting from oil supply shortages and an increasing reliance on natural gas. However, coal firing system has their own serious problem with a high CO₂ production rate compared to oil or natural gas firing system. In order for the future energy supply to depend on coal to an increasingly larger extent, such a problem as high CO₂ production must be definitely solved in view of the suppression of the advancement of global warming.

In light of the foregoing, several methods have been proposed to greatly reduce CO₂ emissions from coal firing generation system. Among these, an oxyfuel boiler system is being developed worldwide as one of the most promising solutions.

The basic operation of oxyfuel boiler system is described below. Typical coal firing boiler uses air as the oxidizer. In the oxyfuel boiler, a large part of the exhaust gas is extracted from the exhaust gas discharge line, then mixed with high purity oxygen produced at the oxygen generator to provide a desired oxygen concentration, and supplied to the boiler as the oxidizer. As a result, the off-gas to be discharged into the environment from oxyfuel boiler plant can be reduced to about 1/4th of those of conventional plants. Also, the CO₂ concentration in the exhaust gas is greatly increased, and therefore CO₂ can be readily separated and collected from the exhaust gas.

The patent document 1 discloses an oxyfuel boiler system in which the exhaust gas is extracted from the boiler, mixed with oxygen produced at an oxygen separator, and supplied the mixture gas to the boiler as the oxidizer.
[Patent Document 1] Japanese Application Patent Hei 5 (1993)-231609

### SUMMARY OF THE INVENTION

In the technology of the above patent document, the exhaust gas extracted from the boiler is cooled and liquefied in a cooler, thereby separating the liquefied CO₂ from the exhaust gas. Then, the liquefied CO₂ is revaporized, mixed with oxygen and recirculated to the boiler. A problem here is that such liquefaction and revaporization imposes an undesired energy loss penalty.

Another problem is that, when the exhaust gas extracted from the boiler is recirculated without any treatments, sulfuric acid dew point corrosion occurs in the recirculation pipes.

An object of the present invention is to provide a simple system that can suppress sulfuric acid dew point corrosion in the piping of oxyfuel boiler system.

The present invention provides an oxyfuel boiler system, comprising: an oxygen generator to separate oxygen from air; a coal supply unit to dry and pulverize coal; a burner having a fuel feed path for feeding pulverized coal supplied from the coal supply unit and an oxidizer feed path for feeding oxidizer; a boiler provided with the burner; an exhaust gas discharge line to discharge exhaust gas generated in the boiler into environment; an exhaust gas treatment apparatus provided in the exhaust gas discharge line, a CO₂ separator provided in the exhaust gas discharge line downstream of the exhaust gas treatment apparatus to separate CO₂ from the exhaust gas; an exhaust gas recirculation line including an exhaust gas tapping port provided in the exhaust gas discharge line to extract a part of the exhaust gas; and an oxygen supply line to supply the oxygen generated at the oxygen generator to the exhaust gas flowing through the exhaust gas recirculation line,
wherein the exhaust gas treatment apparatus is provided with at least an SO₃ removing unit and a moisture removing unit; and the exhaust gas tapping port of the exhaust gas recirculation line is disposed downstream of the exhaust gas treatment apparatus and upstream of the CO₂ separator for recirculating a part of the gas extracted from the port to the coal supply unit and/or the boiler.

According to the present invention, there is provided a simple system that can suppress sulfuric acid dew point corrosion in the piping of oxyfuel boiler system.

### BRIEF DESCRIPTION OF THE DRAWINGS

Fig. 1 illustrates an oxyfuel boiler system according to one of the embodiment of the present invention.
Fig. 2 illustrates an oxyfuel boiler system according to one of the embodiment of the present invention.
Fig. 3 illustrates an oxyfuel boiler system according to one of the embodiment of the present invention.
Fig. 4 illustrates an oxyfuel boiler system according to one of the embodiment of the present invention.
Fig. 5 is a graph illustrating the relationship between the recirculated exhaust gas composition and sulfuric acid dew point.
Fig. 6 illustrates a control apparatus for use in an oxyfuel boiler system according to the present invention.

### DETAILED DESCRIPTION OF THE PREFERRED EMBODIMENTS

For CO₂ emission-free coal-firing oxyfuel boiler system, the main technical objectives are summarized as follows:
(1) To suppress reduction in power generation efficiency resulting from energy consumption in the oxygen generator and CO₂ separator.
(2) To establish a plant control method by which the plant can stably respond to various conditions such as starting, stopping and changing loads, by cooperation with peripheral facilities (such as an oxygen generator and a CO₂ separator).
(3) To achieve stable burning performance and suppress the formation of harmful products to minimal levels when burning coal with an oxidizer mixture of recirculated exhaust gas and oxygen.
(4) To prevent various problems arising from increased concentrations of problematic components contained in the recirculated exhaust gas resulting from introduction of a configuration in which a large amount of the exhaust gas is recirculated.

The present invention is particularly intended to solve the problem (4).

If removing CO₂ from the exhaust gas of a boiler system is the only purpose, burning coal exclusively with oxygen is an effective way. When coal is burned exclusively with oxygen, the major components of the exhaust gas are CO₂ and H₂O. Therefore, by separating and removing the H₂O, for example, by cooling the exhaust gas, a high concentration of CO₂ can be readily collected. However, when coal is burned with oxygen only, the temperature of the burning flame is more than 500°C higher than those in air fired boiler system. Therefore, when oxygen firing is employed in a coal firing plant, expensive heat resistant steels need to be used for the materials of the boiler. Another problem is that the oxidizer jet velocity in the burner is relatively low, thus making it difficult to form a stable flame. Also, the amount of the exhaust gas generated in the boiler is less than 1/4th of those in air fired boilers, and therefore the velocity of the exhaust gas flowing through the heat transfer tube of the boiler is slower. This poses yet another problem because such slow velocity of exhaust gas degrades the thermal transfer efficiency and therefore the thermal recovery efficiency.

To overcome the above problems, conventional oxyfuel boiler system employ a configuration in which a large amount of the exhaust gas is recirculated, mixed with oxygen, and then supplied to the boiler. Specifically, such conventional oxyfuel boiler system is designed so that the flow rate of the mixture gas (of the oxidizer supplied to the burner and the exhaust gas supplied to the boiler) is more than 70% of the flow rate of air in conventional air fired boiler. In this manner, high efficiency thermal recovery and electric power generation can be stably achieved without greatly modifying a conventional air fired boiler system.

It has been found, however, that such system that recirculates a large amount of exhaust gas still have the following problems.

The first problem concerns sulfuric acid dew point corrosion. To prevent sulfuric acid dew point corrosion caused by SO₃ contained in the exhaust gas, the conventional air fired boiler system is designed so that the internal temperatures of the system components located upstream of the desulfurization device never fall below the sulfuric acid dew point of the exhaust gas. In the oxyfuel boiler system, too, an exhaust gas containing SO₃ passes through the system components such as the recirculation pipes, recirculation fan, heat exchanger, coal supply unit and burner. Therefore, apparently, the oxyfuel boiler system also requires measures to prevent sulfuric acid dew point corrosion occurring at the system components and piping which are exposed to SO₃. Here, the oxyfuel boiler system has their own specific problem. That is, the SO₃ and H₂O concentrations in the recirculated exhaust gas of the oxyfuel boiler system are about four times as high as those in the exhaust gas of air fired boiler system, and as a result the sulfuric acid dew point of the recirculated exhaust gas of oxyfuel boiler system is about 40°C higher than that of the exhaust gas of air fired boiler system. This seriously increases the risk of sulfuric acid dew point corrosion in the oxyfuel boiler system; therefore some novel countermeasures need to be taken to address this problem. Particularly important is anti-corrosion protection for the coal supply unit of a system and the piping extending downstream therefrom to the burner, because the temperature of the recirculated exhaust gas is most likely dropping during passage through those system components.

The second problem relates to degradation in the coal drying capability. In the conventional air fired boiler, heated high temperature air is supplied to pulverized coal in the coal supply unit, thereby drying, before burning, a large amount of water adsorbed to the pulverized coal. If the drying is insufficient, the adhered water removes a large quantity of latent heat during vaporization when the coal is ignited by the burner, thereby degrading the ignition performance and resulting in firing instability. This problem is worse for the oxyfuel boiler system because the H₂O concentration in the recirculated exhaust gas in the air fired boiler system is as high as about 30%. Therefore, in the oxyfuel boiler system, in order to achieve coal drying capability with the recirculated exhaust gas comparable to that of high temperature air in the air fired boiler system, some extra measure is needed such as heating the recirculated exhaust gas to a higher temperature. However, heating the exhaust gas to a higher temperature will be accompanied by many problems because it increases the risk of fire hazards or it requires careful choice of system components that are resistant to such high temperatures.

The third problem relates to increased NOₓ production. It is generally known that, in the oxyfuel boiler system, the N₂ concentration in the exhaust gas is very low; therefore the thermal NOₓ generation (and therefore the NOₓ generation per unit heat generation) is very low compared to those in the conventional boiler. So, in order to further reduce the NOₓ conversion ratio in the oxyfuel boiler system, some method is needed that can suppress the amount of fuel NOₓ formed by the oxidization of nitrogen in the fuel. However, the following fact has been found: As pointed out in the descriptions of the first and second problems, the H₂O concentration in the recirculated exhaust gas in the oxyfuel boiler system is as high as about 30%. As a result, the oxidization of nitrogen in the firing flame is accelerated, thus increasing the fuel NOₓ formation ratio.

Embodiments of oxyfuel boiler system according to the present invention will be described below with reference to the accompanying drawings. However, the present invention is not limited to those embodiments described below.

### (First Embodiment)

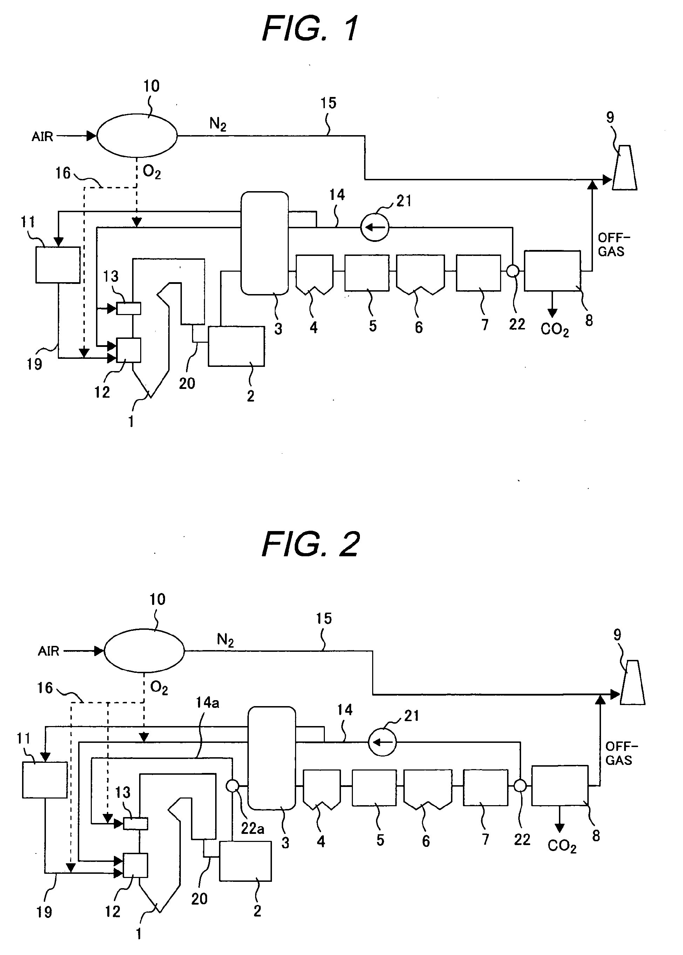

Fig. 1 illustrates an oxyfuel boiler system according to an embodiment of the present invention. Fuel coal is transported, via a coal transfer device (not shown), to a coal mill 11 (serving as a coal supply unit) and is pulverized to a particle size suitable for pulverized coal firing. The pulverized coal is carried by recirculated gas that is also supplied to the coal mill 11, and is sent to a fuel feed path for a burner 12 through a coal supply pipe 19. The burner 12 is provided with the fuel feed path for feeding fuel to a boiler furnace and an oxidizer feed path for feeding an oxidizer. An oxygen supply pipe 16 is connected to a location along the coal supply pipe 19, where oxygen is mixed as needed. Mixing of a proper amount of oxygen with the recirculated gas in the coal supply pipe 19 has the effect of enhancing the ignition performance of the coal in the burner 12. One end of the oxygen supply pipe 16 is connected to an oxygen generator 10, and the other end branches out to be connected to an exhaust gas recirculation pipe 14 and the coal supply pipe 19.

Oxygen is separated from air at the oxygen generator 10, and is then supplied to the oxygen supply pipe 16. Gas containing a large proportion of nitrogen generated in the oxygen generator 10 is exhausted through a nitrogen gas exhaust pipe 15 and a discharge stack 9.

The oxyfuel boiler system in Fig. 1 has an exhaust gas recirculation line including: an exhaust gas tapping port 22 provided in the exhaust gas discharge line; and the exhaust gas recirculation pipe 14 extracting a part of the exhaust gas. The recirculation pipe 14 splits into two branches, one of which is connected to the coal mill 11.

The other branch of the recirculation pipe 14 is connected to the oxidizer feed path of the burner 12, from which a mixture gas of the recirculated exhaust gas and the oxygen supplied through the oxygen supply pipe 16 is fed into the burner. The mixture gas and the coal supplied through the coal supply pipe 19 are fed into the burner 12 and then into a boiler 1 where a flame is formed.

The recirculation pipe 14 is connected to an after-gas port 13 which is located in the boiler downstream of the burner 12, and the mixture gas is also fed into the boiler 1 independently of the oxidizer feed path of the burner 12. The after-gas port 13 has a function similar to that of the after-air port of air fired boiler. That is, by properly regulating the amounts of the mixture gases supplied to the burner 12 and the after-gas port 13, a reductive atmosphere region is formed in the boiler 1, thus preventing nitrogen in the fuel coal from being converted into NOₓ. Also, the mixture gas jet exiting from the after-gas port 13 can promote gas mixing in the boiler 1 and reduce unburned coal.

The flow rates of the recirculated exhaust gases supplied to the coal mill 11, burner 12 and after-gas port 13 are each regulated by a flow rate regulator (not shown). The oxygen flow rate through each branch of the oxygen supply pipe 16 is also regulated by a flow rate regulator (not shown). In addition, the oxygen concentration of the mixture gas supplied from each of the burner 12 and after-gas port 13 to the boiler 1 may be independently controlled. That is, the oxygen supply pipe 16 is further split into two branches respectively to the burner 12 and the after-gas port 13, and the flow rate through each branch is independently regulated. And, the two branches of the oxygen supply pipe 16 are respectively connected to the two branches of the recirculation pipe 14 (one for the burner 12 and the other for the after-gas port 13). Such independent regulation of the flow rate and oxygen concentration of the mixture gas supplied to each of the burner 12 and the after-gas port 13 is advantageous because the formation of the reductive atmosphere region in the boiler 1 and the amount of unburned coal can be more accurately controlled.

Heat generated in the boiler 1 is used to produce high-temperature, high-pressure steam, which is then supplied to a steam turbine electric generator (not shown) to generate electricity.

Exhaust gas generated in the boiler 1 is discharged through an exhaust gas discharge line 20 and enters a NOₓ removing unit 2 in order to reduce the NOₓ content in the exhaust gas. The NOₓ removing unit 2 may be omitted when NOₓ generation in the boiler 1 can be sufficiently reduced by an improved combustion method or other methods.

Exhaust gas exiting the NOₓ removing unit 2 then enters a heat exchanger 3 and the temperature of the exhaust gas is reduced. Heat extracted from the exhaust gas in the heat exchanger 3 is returned to the recirculated exhaust gas also passing through the heat exchanger 3, then heated recirculated exhaust gas is supplied to the boiler 1, thus suppressing the thermal efficiency degradation of the plant.

The exhaust gas exiting the NOₓ removing unit 2 then enters a dry dust removing unit 4 where more than 95% of the dust is removed, and then enters a wet desulfurization unit 5 where more than 95% of the SO₃ is removed. The exhaust gas, then enters a wet dust removing unit 6 (serving as an SO₃ removing apparatus) where more than 98% of the SO₃ is removed, and then enters a moisture removing cooler 7 (serving as a moisture removing apparatus) where the water content in the exhaust gas is reduced. Then, a part of the exhaust gas is extracted from the exhaust gas tapping port 22 provided in the exhaust gas discharge line 20 downstream of the moisture removing cooler 7, introduced into the recirculation pipe 14 by a recirculation fan 21, heated in the heat exchanger 3, and, as already described above, distributed to the coal mill 11, burner 12 and after-gas port 13.

As described above, in the embodiment of an exhaust gas treatment apparatus having the SO₃ removing apparatus and the moisture removing apparatus, an exhaust gas tapping port is provided downstream of the SO₃ removing apparatus and the moisture removing apparatus, thereby removing SO₃ and moisture from the exhaust gas and recirculating them. As a result, in the embodiment, the recirculated exhaust gas contains only as low as less than 1 ppm of SO₃ and as low as less than 1% of moisture; therefore the sulfuric acid dew point can be substantially reduced compared to system without such SO₃ removing apparatus and moisture removing apparatus to the recirculated exhaust gas. Therefore, there is no need for costly anti-corrosion measures, such as the use of expensive corrosion resistant materials for the system components and piping, tight thermal insulation and the use of heaters. In addition, the oxyfuel boiler system of the embodiment can be readily configured by reusing wet dust removing unit and moisture removing cooler normally employed in the existing coal firing boiler system in stead of providing new SO₃ removing apparatus and moisture removing apparatus. Thus, possible corrosion at various system units (such as the recirculation pipe 14, recirculation fan 21, heat exchanger 3, coal mill 11 and coal supply pipe 19) can be remarkably prevented with a simple system configuration employing existing apparatuses.

The SO₃ removing apparatus used in the embodiment is preferably a wet dust removing apparatus. This is because it is difficult for wet desulfurization apparatuses to remove SO₃ mist particles bonding to water molecules, while wet dust removing apparatuses are suitable for removal of such SO₃ mist.

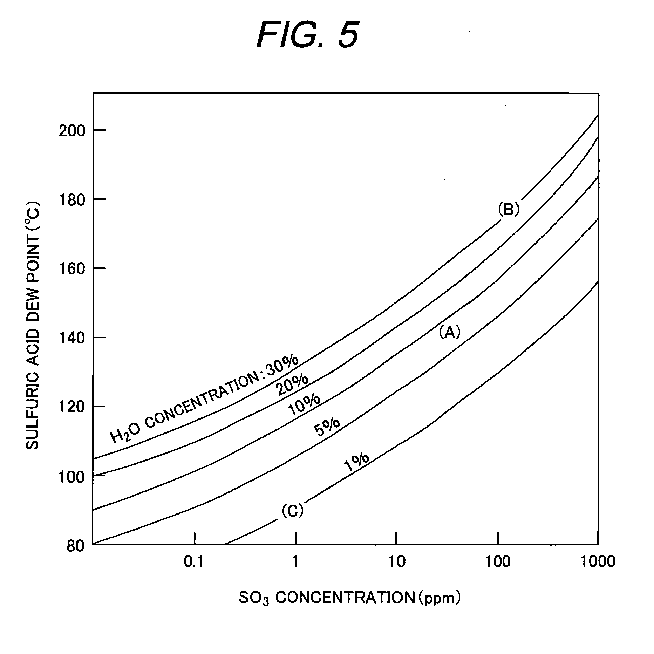

The above-mentioned change in the sulfuric acid dew point is described below in detail. Fig. 5 is a well known graph illustrating the change in sulfuric acid dew point as a function of SO₃ and water concentrations in exhaust gas. The point labeled "A" in the figure represents the sulfuric acid dew point of an exhaust gas composition of a conventional air fired boiler. The point labeled "B" represents the sulfuric acid dew point of a recirculated exhaust gas composition of an oxyfuel boiler system without treatments by SO₃ and moisture removing apparatuses. In oxyfuel boiler systems, the exhaust gas amount is about 30% less than those of air fired boiler systems. In addition, recirculation of the exhaust gas causes the SO₃ and water concentrations to increase by a factor of 3 to 4 times. As a result, the sulfuric acid dew point is about 40°C higher those of exhaust gases in conventional air fired boiler system, thus seriously increasing the risk of sulfuric acid dew point corrosion. The point labeled "C" represents the sulfuric acid dew point of the recirculated exhaust gas composition according to the present embodiment. As can be seen, the sulfuric acid dew point of the point "C" is about 90°C lower than that of the point "B", and in addition, the SO₃ concentration can be suppressed to as low as about 1 ppm. Therefore, sulfuric acid dew point corrosion can be effectively prevented.

Moreover, in the present embodiment, the exhaust gas is extracted, for recirculation, from the exhaust gas tapping port provided downstream of the moisture removing apparatus, and the thus extracted exhaust gas is also supplied to the coal supply unit. Thus, the moisture concentration in the recirculation exhaust gas supplied to the coal supply unit can be reduced to levels comparable to the concentration levels of moisture in air supplied to the coal mill of conventional air fired boiler. Therefore, degradation in coal drying capability, which is a problem with conventional oxyfuel boiler system, can be suppressed without the need for additional devices or any special design. Also, the reduction in moisture concentration in the recirculated exhaust gas made according to the present embodiment has the effect of limiting formation of fuel NOₓ in the burning flame, which is advantageous in view of reducing harmful products in the off-gas to be discharged into the environment.

The unrecirculated part of the exhaust gas exiting the moisture removing cooler 7 enters a CO₂ liquefaction unit 8 (serving as a CO₂ separating apparatus), where CO₂ is liquefied and separated from the exhaust gas. The separated CO₂ may be returned to consumers in the form of a high pressure gas without liquefying through a pipeline or the like. The exhaust gas which remains unliquefied in the CO₂ liquefaction unit 8 is discharged as off-gas. The off-gas contains nitrogen and oxygen as major components, and minor amounts of other components such as NOₓ and CO₂. The off-gas and a large amount of nitrogen generated at the oxygen generator 10 are mixed and discharged into the environment through the discharge stack 9.

Since the exhaust gas tapping port is provided upstream of the CO₂ separating apparatus, the exhaust gas can be directly recirculated without any treatment. That is, liquefied CO₂ need not be revaporized for recirculation to the boiler, thus eliminating energy loss accompanying such revaporization.

In the present embodiment, the exhaust gas extracted from the exhaust gas tapping port is also supplied to the oxidizer feed path of the burner 12 and to the after-gas port 13. As described, moisture is substantially removed from the exhaust gas supplied to the oxidizer feed path of the burner 12 and the after-gas port 13, and hence NOₓ generation can be reduced to a greater extent.

The oxyfuel boiler system of the present embodiment can also be effectively achieved by retrofitting an existing pulverized coal firing boiler. Typically, existing pulverized coal firing boiler includes: a coal supply unit that dries and pulverizes coal; a burner having a fuel feed path for feeding the coal supplied from the coal supply unit and an oxidizer feed path for feeding oxidizer; a boiler having the burner; an exhaust gas discharge line for discharging exhaust gas generated in the boiler into the environment; and an exhaust gas treatment apparatus provided in the exhaust gas discharge line. The present embodiment is also effectively adaptable to such existing pulverized coal firing boiler by adding the exhaust gas recirculation line of the present embodiment, an oxygen generator, and a CO₂ separator.

In the present embodiment, the exhaust gas extracted from the exhaust gas tapping port 22 is directly recirculated to the boiler in a gaseous state rather than being once liquefied and then revaporized. Then, the exhaust gas flowing through the recirculation pipe 14 is heated in the heat exchanger 3. Here, a heat exchanger normally employed in existing air fired boiler can be diverted to a heat exchanger necessary for the oxyfuel boiler, and therefore reductions in cost can be made.

Moreover, as described above, in the present embodiment of an exhaust gas treatment apparatus having the SO₃ removing apparatus and the moisture removing apparatus, an exhaust gas tapping port is provided downstream of the SO₃ removing apparatus and the moisture removing apparatus, thereby removing SO₃ and moisture from the exhaust gas and recirculating them. As a result, in the embodiment, the recirculated exhaust gas contains only as low as less than 1 ppm of SO₃ and as low as less than 1% of moisture; therefore the sulfuric acid dew point can be substantially reduced compared to system without such SO₃ removing apparatus and moisture removing apparatus to the recirculated exhaust gas. Also, in the present embodiment, the recirculated exhaust gas having a greatly lowered sulfuric acid dew point is heated by passing through the heat exchanger. Therefore, along the piping between the coal supply unit and the burner, the difference between the exhaust gas temperature and the sulfuric acid dew point of the exhaust gas is increased, thereby suppressing corrosion.

### (Second Embodiment)

Fig. 2 illustrates an oxyfuel coal-firing boiler system according to an another embodiment of the present invention.

Many components of the present embodiment are similar to their counterparts described in the first embodiment, so only the differences from the first embodiment are described below. Components not described below have the same function and effect as the similar components of the first embodiment.

The present embodiment differs from the first embodiment in that two exhaust gas tapping ports are provided in the exhaust gas discharge line 20, and the exhaust gas extracted from each port is recirculated to a different part of the system through a different exhaust gas recirculation pipe.

The present embodiment has a second exhaust gas tapping port 22a in addition to a first exhaust gas tapping port 22 similar to the tapping port 22 of the first embodiment. The second exhaust gas tapping port 22a is provided upstream of the heat exchanger 3, the dry dust removing unit 4, the wet desulfurization unit 5, the wet dust removing unit 6 and the moisture removing cooler 7 and downstream of the NOₓ removing unit 2.

To the tapping port 22a is connected to an exhaust gas recirculation pipe 14a, through which a part of the exhaust gas is recirculated to the after-gas port 13 by a recirculation fan (not shown). The recirculation pipe 14a is provided with a flow rate regulator (not shown), thereby regulating the flow rate of the recirculated exhaust gas. To the recirculation pipe 14a is connected a branch of the oxygen supply pipe 16, through which oxygen is supplied to and mixed with the recirculated exhaust gas. Here, the flow rate of the oxygen is also regulated by a flow rate regulator (not shown). Thus, the flow rate and oxygen concentration of the mixture gas supplied to the after-gas port 13 can be regulated independently.

The exhaust gas recirculation pipe 14, through which part of the exhaust gas is recirculated to the coal mill 11 and the oxidizer feed path of the burner 12, is connected to the first tapping port 22 provided downstream of the moisture removing cooler 7 as similarly to the first embodiment, and exhaust gas that has been subjected to all the exhaust gas treatments is recirculated. However, unlike the first embodiment, the first exhaust gas recirculation pipe 14 extending from the first tapping port 22 is not connected to the after-gas port 13.

In the present embodiment, the exhaust gas tapping port 22a may be provided between the boiler 1 and the NOₓ removing unit 2 in the exhaust gas discharge line 20.

As described, the exhaust gas tapping port for the second exhaust gas recirculation line is provided between the NOₓ removing unit and the heat exchanger, and thereby the rate of the exhaust gas flowing through each unit from the heat exchanger 3 to the moisture removing cooler 7 can be reduced by about 15%. This is advantageous because the boiler system can be downsized. In addition, a part of the high temperature exhaust gas is almost directly recirculated to the boiler without thermal loss by equipment, thus improving the thermal efficiency of the plant. When the sulfuric acid dew point of the exhaust gas in the recirculation pipe 14a is higher than that of the recirculated exhaust gas in the first embodiment, however, the high temperature exhaust gas higher than 350°C can be recirculation to the after-gas port 13 without suffering from any serious temperature drop, thus minimizing the risk of sulfuric acid dew point corrosion.

### (Third Embodiment)

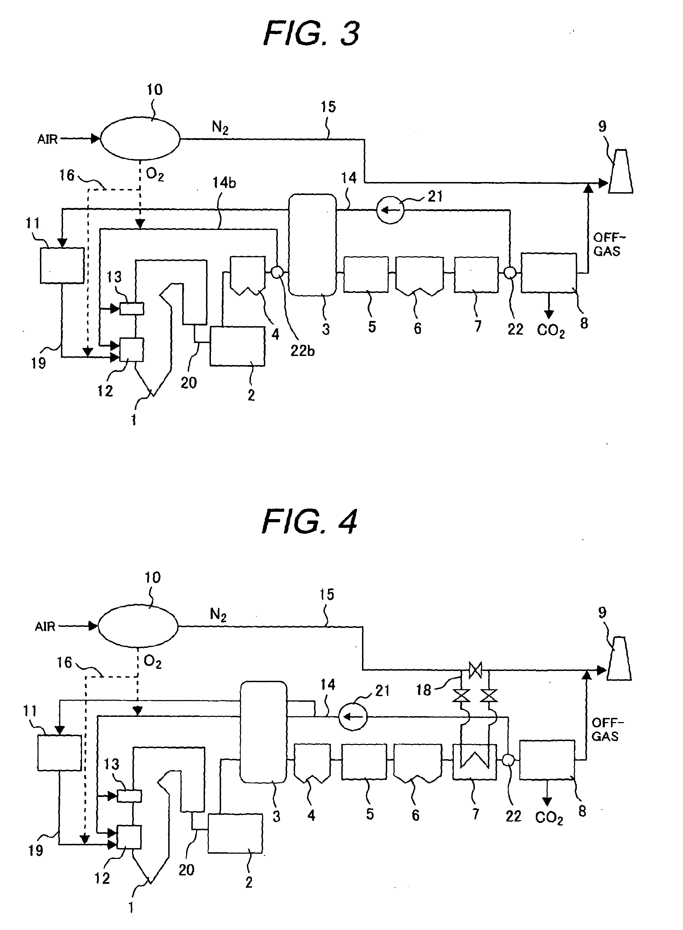

Fig. 3 illustrates an oxyfuel coal-firing boiler system according to an other embodiment of the present invention.

Many components of the the present embodiment are similar to their counterparts described in the first and second embodiments, so only the differences from the first and second embodiments are described below. Components not described below have the same function and effect as the similar components of the first and second embodiments.

The present embodiment differs from the first and second embodiments in that one of the two exhaust gas tapping ports is provided between the dry dust removing unit 4 and the heat exchanger 3, and a part of the exhaust gas extracted from the tapping port 22b is recirculated to the oxidizer feed path of the burner 12 and the after-gas port 13.

In addition to a first exhaust gas tapping port 22 similar to the tapping port 22 of the first embodiment, the present embodiment provides a second exhaust gas tapping port 22b in the exhaust gas discharge line 20 upstream of the heat exchanger 3, the wet desulfurization unit 5, the wet dust removing unit 6 and the moisture removing cooler 7 and downstream of the dry dust removing unit 4. However, the dry dust removing unit 4 in the present embodiment is provided upstream of the heat exchanger 3, so the dry dust removing unit needs to be able to treat higher temperature exhaust gas. Desirably, the dry dust removing unit can treat exhaust gas higher than 350°C.

To the tapping port 22b is connected an exhaust gas recirculation pipe 14b, through which a part of the exhaust gas is recirculated to the after-gas port 13 and the oxidizer feed path of the burner 12 by a recirculation fan (not shown). The recirculation pipe 14b is provided with a flow rate regulator (not shown), thereby independently regulating the flow rate of the exhaust gas recirculated to the after-gas port 13 and the burner 12. To the recirculation pipe 14b is connected a branch of the oxygen supply pipe 16, through which oxygen is supplied to and mixed with the recirculated exhaust gas. Here, the flow rate of the oxygen is also regulated by a flow rate regulator (not shown). Similarly to the first embodiment, there may be employed a regulation device that can independently regulate the flow rate and oxygen concentration of the mixture gas supplied to each of the after-gas port 13 and the oxidizer feed path of the burner 12. To provide the such regulation device is advantageous because the formation of the reductive atmosphere region in the boiler 1 and the amount of unburned coal can be more accurately controlled.

The exhaust gas recirculation pipe 14 is connected to the first tapping port 22 provided downstream of the moisture removing cooler 7, and a part of the exhaust gas that has been subjected to all the exhaust gas treatments is recirculated to the coal mill 11. However, unlike the first and second embodiments, the exhaust gas recirculation pipe is not connected to the after-gas port 13 or the oxidizer feed path of the burner 12.

As described, the exhaust gas tapping port for the second exhaust gas recirculation line is provided between the dry dust removing unit and the heat exchanger, and thereby the rate of the exhaust gas flowing through each of the heat exchanger 3, the wet desulfurization unit 5, the wet dust removing unit 6 and the moisture removing cooler 7 can be reduced by about 50% compared to the first embodiment. This is advantageous because the boiler system can be downsized to a greater extent than that of the second embodiment. In addition, an even larger part of the high temperature exhaust gas is almost directly recirculated to the boiler without thermal loss by equipment than that of the second embodiment, thus more greatly improving the thermal efficiency of the boiler system. When the sulfuric acid dew point of the exhaust gas in the recirculation pipe 14b is higher than that of the second embodiment, however, the high temperature gas higher than 350°C can be recirculated to the after-gas port 13 and the burner 12 without suffering from any serious temperature drop, thus minimizing the risk of sulfuric acid dew point corrosion.

In addition, the second exhaust gas tapping port for the second exhaust gas recirculation line is provided downstream of the dry dust removing unit, and thus exhaust gas that has been subjected to a dust removing treatment can be supplied to the after-gas port and the oxidizer feed path of the burner. This can prevent dust contained in the exhaust gas from clogging the exhaust gas recirculation line, the after-gas port and the oxidizer feed path of the burner as exhaust-gas jet outlets to the boiler.

### (Fourth Embodiment)

Fig. 4 illustrates an oxyfuel coal firing boiler system according to an other embodiment of the present invention.

Many components of the present embodiment are similar to their counterparts described in the first embodiment, so only the differences from the first embodiment are described below. Components not described below have the same function and effect as the similar components of the first embodiment.

The present embodiment differs from the first embodiment in that the nitrogen gas exhaust pipe 15 through which gas mainly containing nitrogen is discharged from the oxygen generator 10 for separating oxygen from air has a nitrogen gas bypass pipe 18. Also, the nitrogen gas bypass pipe 18 is connected with a heat transfer pipe provided in the moisture removing cooler 7 so that the nitrogen gas in the nitrogen gas bypass pipe and the exhaust gas in the exhaust gas discharge line 20 can be heat exchanged with each other in the moisture removing cooler 7. The nitrogen gas thus heat exchanged is returned to the nitrogen gas exhaust pipe 15, mixed with the off-gas from the CO₂ liquefaction unit 8 and discharged into the environment through the discharge stack 9. In addition, each of the nitrogen gas bypass pipe 18 and the nitrogen gas exhaust pipe is provided with a flow rate regulating valve and an on-off valve so that the flow rate of nitrogen gas flowing through the nitrogen gas bypass pipe can be regulated.

In the present embodiment, use of nitrogen gas having a temperature lower than the ambient temperature is more effective because it enhances the heat exchange efficiency with the exhaust gas and therefore provides a high dehumidification effect. Therefore, the oxygen generator 10 is preferably of a cryogenic separation type.

In addition, a heat exchanger may be placed separately downstream of the moisture removing cooler 7, instead of providing in the cooler 7. Or, only a heat exchanger may be constructed a moisture removing unit, instead of providing the moisture removing cooler.

The configuration of the present embodiment can make more efficient use of the cold temperature of the exhausted nitrogen gas and can remove moisture from the recirculated exhaust gas more reliably. Thus, the thermal efficiency of the entire system can be enhanced, and also the effects of the invention provided by the removal of moisture from the exhaust gas can be achieved more stably.

### (Fifth Embodiment)

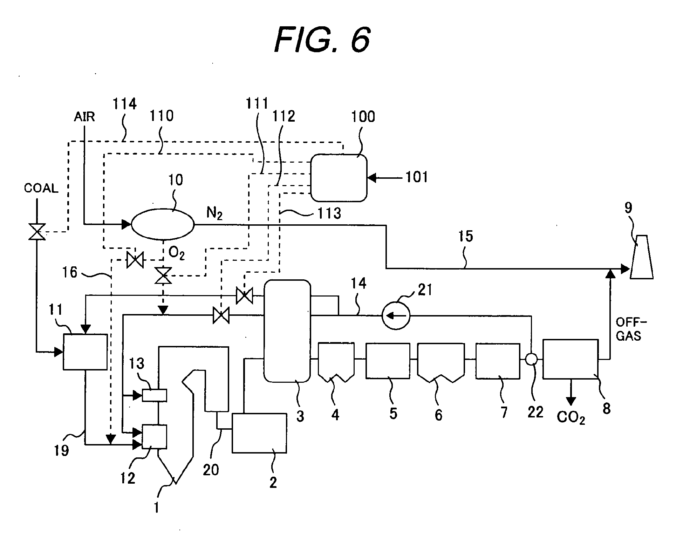

Fig. 6 illustrates a control apparatus for controlling the recirculated exhaust gas in the oxyfuel boiler system in the first embodiment. In the present invention, the control apparatus for controlling the recirculated exhaust gas is described below.

A recirculation exhaust gas control apparatus 100 outputs: signals 112 and 113 that each control the flow rate of a corresponding recirculation gas stream based on a demand signal 101; signals 110 and 111 that each control the flow rate of a corresponding O₂ gas supply stream; and a signal 114 that controls the flow rate of coal.

The demand signal 101 essentially includes a load demand and an output demand. The load demand is a demand signal that determines the load of the boiler furnace. The recirculation exhaust gas control apparatus 100 determines the supply rate of coal based on the load demand, and then determines, based on the thus determined coal supply rate, the rate of each O₂ supply (i.e., the ratio of each O₂ supply rate/the coal supply rate) as well as the flow rate of each recirculation gas stream (i.e., the O₂ concentration in each recirculation gas stream). Each flow rate is controlled by using a flow rate detector (not shown). Specifically, the supply rate of coal is controlled by sending the signal 114 to the flow rate regulating valve provided in the coal supply pipe for supplying coal to the coal mill 11. Likewise, the supply rates of O₂ are controlled by sending the signals 110 and 111 to the respective flow rate regulating valves provided in the oxygen supply pipe 16, and the flow rates of the recirculated gas are controlled by sending the signals 112 and 113 to the respective flow rate regulating valves provided in the exhaust gas recirculation pipe 14.

The output demand is a demand signal that is issued when the load demand signal remains unchanged, yet the heat generation of the furnace deviates from the target value demanded by the load demand signal. Usually, the heat generation of the furnace is fine-adjusted by changing the flow rate of each recirculation gas stream (i.e., by changing the O₂ concentration in each recirculation gas stream) rather than by changing the rate of each O₂ supply. by configuring a CO₂ emission-free oxyfuel boiler system according to the present invention, various cost increasing factors and technical barriers accompanied by a large amount of exhaust gas recirculation, but such recirculation is accompanied by various cost increasing factors and technical barriers can be removed, thus promoting widespread adoption of the CO₂ emission-free power plant and therefore retarding the pace of global warming.

## Claims

1. An oxyfuel boiler system, comprising:
an oxygen generator to separate oxygen from air;
a coal supply unit to dry and pulverize coal;
a burner having a fuel feed path for feeding pulverized coal supplied from the coal supply unit and an oxidizer feed path for feeding oxidizer;
a boiler provided with the burner;
an exhaust gas discharge line to discharge exhaust gas generated in the boiler into environment;
an exhaust gas treatment apparatus provided in the exhaust gas discharge line,
a CO₂ separator provided downstream of the exhaust gas treatment apparatus in the exhaust gas discharge line to separate CO₂ from the exhaust gas;
an exhaust gas recirculation line including an exhaust gas tapping port provided in the exhaust gas discharge line to extract a part of the exhaust gas; and
an oxygen supply line to supply the oxygen generated at the oxygen generator to the exhaust gas flowing through the exhaust gas recirculation line,
wherein
the exhaust gas treatment apparatus is provided with at least an SO₃ removing unit and a moisture removing unit; and
the exhaust gas tapping port of the exhaust gas recirculation line is disposed downstream of the exhaust gas treatment apparatus and upstream of the CO₂ separator for recirculating a part of the gas extracted from the port to the coal supply unit and/or the boiler.

2. The oxyfuel boiler system according to Claim 1, wherein
the exhaust gas extracted from the tapping port is supplied to the oxidizer feed path of the burner and an after-gas port provided in the boiler downstream of the burner.

3. An oxyfuel boiler system, comprising:
an oxygen generator to separate oxygen from air;
a coal supply unit to dry and pulverize coal;
a burner having a fuel feed path for feeding pulverized coal supplied from the coal supply unit and an oxidizer feed path for feeding oxidizer;
a boiler provided with the burner;
an exhaust gas discharge line to discharge an exhaust gas generated in the boiler into environment;
an exhaust gas treatment apparatus provided in the exhaust gas discharge line,
a CO₂ separator provided downstream of the exhaust gas treatment apparatus in the exhaust gas discharge line to separate CO₂ from the exhaust gas;
a couple of exhaust gas recirculation lines including an exhaust gas tapping port provided in the exhaust gas discharge line to extract a part of the exhaust, respectively; and
an oxygen supply line to supply the oxygen generated at the oxygen generator to the exhaust gas flowing through the exhaust gas recirculation line,
wherein
the exhaust gas treatment apparatus is provided with at least an NOₓ removing unit, a heat exchanger, an SO₃ removing unit and a moisture removing unit; and
the exhaust gas tapping port of a first exhaust gas recirculation line is disposed downstream of the SO₃ emoving unit and the moisture removing unit and upstream of the CO₂ separator for recirculating the gas extracted from the port to the coal supply unit, and
the exhaust gas tapping port of s second exhaust gas recirculation line is disposed downstream of the NOₓ removing unit and upstream of the heat exchanger for recirculating a part of the gas extracted from the port to the after-gas port disposed downstream of the burner.

4. The oxyfuel boiler system according to Claim 3, wherein
the exhaust gas extracted from the tapping port of the second exhaust gas recirculation line is supplied to the oxidizer feed path of the burner and the after-gas port provided in the boiler downstream of the burner.

5. A method for retrofitting a pulverized coal firing boiler including:
a coal supply unit to dry and pulverize coal; a burner having a fuel feed path for feeding pulverized coal supplied from the coal supply unit and an oxidizer feed path for feeding oxidizer; a boiler provided with the burner; an exhaust gas discharge line to discharge exhaust gas generated in the boiler into environment; and an exhaust gas treatment apparatus provided in the exhaust gas discharge line,
the method comprising:
providing an oxygen generator to separate oxygen from air;
providing a CO₂ separator downstream of the exhaust gas treatment apparatus in the exhaust gas discharge line to separate CO₂ from the exhaust gas;
providing the exhaust gas treatment apparatus having an SO₃ removing unit and a moisture removing unit, and
providing an exhaust gas tapping port of an exhaust gas recirculation line disposed downstream of the SO₃ removing unit and the moisture removing unit and upstream of the CO₂ separator to mix a part of the exhaust gas extracted from the tapping port with the oxygen separated from the oxygen generator and supply mixture gas to the coal supply unit.

6. A control apparatus of an oxyfuel boiler system, comprising:
an oxygen generator to separate oxygen from air;
a coal supply unit to dry and pulverize coal;
a burner having a fuel feed path for feeding pulverized coal supplied from the coal supply unit and an oxidizer feed path for feeding oxidizer;
a boiler provided with the burner;
an exhaust gas discharge line to discharge exhaust gas generated in the boiler into environment;
an exhaust gas treatment apparatus provided in the exhaust gas discharge line,
a CO₂ separator provided downstream of the exhaust gas treatment apparatus in the exhaust gas discharge line to separate CO₂ from the exhaust gas;
an exhaust gas recirculation line including an exhaust gas tapping port provided in the exhaust gas discharge line to extract a part of the exhaust gas, and
an oxygen supply line to supply the oxygen generated at the oxygen generator to the exhaust gas flowing through the exhaust gas recirculation line,
wherein
the exhaust gas treatment apparatus is provided with at least an SO₃ removing unit and a moisture removing unit; and
the exhaust gas tapping port of the exhaust gas recirculation line is disposed downstream of the exhaust gas treatment apparatus and upstream of the CO₂ separator for recirculating a part of the gas extracted from the port to the coal supply unit,
the control apparatus comprising:
a device to control a rate of coal supplied to the coal supply unit, a flow rate of the recirculation exhaust gas and a rate of the oxygen supplied by the oxygen supply line in response to a demand signal indicating a load of the boiler.

7. A method for controlling an oxyfuel boiler system including:
an oxygen generator to separate oxygen from air;
a coal supply unit to dry and pulverize coal;
a burner having a fuel feed path for feeding pulverized coal supplied from the coal supply unit and an oxidizer feed path for feeding oxidizer;
a boiler provided with the burner;
an exhaust gas discharge line to discharge exhaust gas generated in the boiler into environment;
an exhaust gas treatment apparatus provided in the exhaust gas discharge line,
a CO₂ separator provided downstream of the exhaust gas treatment apparatus in the exhaust gas discharge line to separate CO₂ from the exhaust gas;
an exhaust gas recirculation line including an exhaust gas tapping port provided in the exhaust gas discharge line to extract a part of the exhaust gas, and
an oxygen supply line to supply the oxygen generated at the oxygen generator to the exhaust gas flowing through the exhaust gas recirculation line,
wherein
the exhaust gas treatment apparatus is provided with at least an SO₃ removing unit and a moisture removing unit; and
the exhaust gas tapping port of the exhaust gas recirculation line is disposed downstream of the exhaust gas treatment apparatus and upstream of the CO₂ separator for recirculating a part of the gas extracted from the port to the coal supply unit,
the method comprising:
controlling a rate of the coal supplied to the coal supply unit, a flow rate of the recirculation exhaust gas and a rate of the oxygen supplied by the oxygen supply line in response to a demand signal indicating a load of the boiler.
